# EUROPEAN PATENT APPLICATION

(11) **EP 4 123 440 A1**
(43) Date of publication of application: **25.01.2023**
(21) Application number: 21775306.0
(22) Date of filing: 25.01.2021
(51) Int. Cl.: G06F 3/0488

(54) **METHOD FOR TURNING ON SINGLE-HANDED OPERATION MODE, TERMINAL AND COMPUTER STORAGE MEDIUM**

(30) Priority: 25.03.2020 CN 202010215998
(71) Applicant: GUANGDONG OPPO MOBILE TELECOMMUNICATIONS CORP., LTD., Dongguan, Guangdong 523860 (CN)
(72) Inventor: DAI, Runda, Dongguan, Guangdong 523860 (CN)
(74) Representative: Trichard, Louis
(86) International application number: PCT/CN2021/073673
(87) International publication number: WO 2021/190117

(57) **Abstract**

Disclosed in the embodiments of the present application are a method for turning on a single-handed operation mode, a terminal and a computer storage medium. The method for turning on the single-handed operation mode comprises: when a first interface is displayed in a full-screen region, detecting a sliding touch operation in a first region, and determining sliding information of the sliding touch operation, wherein the first region is located on the left side or the right side of the full-screen region; in response to the sliding touch operation, calling out a single-handed mode hot zone in a second region, wherein the second region is another region different from the first region in the full-screen region; when the end of the sliding touch operation is detected by means of the single-handed mode hot zone, turning on the single-handed operation mode; and on the basis of the single-handed operation mode, displaying the first interface in the third region according to the sliding information so as to achieve a single-handed operation, wherein the third region is a part of the full-screen region.

## Description

### CROSS-REFERENCES TO RELATED APPLICATIONS

This application claims the priority of Chinese Patent application No. 202010215998.2, filed March 25, 2020, and entitled "METHOD FOR TURNING ON SINGLE-HANDED OPERATION MODE, TERMINAL AND COMPUTER STORAGE MEDIUM", and the contents of which are incorporated herein by reference in their entirety.

### TECHNICLE FIELD

The present disclosure relates to the field of terminal technology, and more particularly, to a method for turning on a single-hand operation mode, a terminal and a computer storage medium.

### BACKGROUND TECHNIQUE

With continuous developments of terminal technology, functions and performances of various devices of a terminal have also been greatly improved. For example, a size of a display screen of the terminal has gradually increased. In many scenarios, users often encounter needs for single-hand operation. In the case of a terminal having a large screen, it is difficult to touch the entire display screen with a finger. To enable operations of full-screen terminals or large-screen terminals by single-hand operation for meeting the user's need, the terminal thus provides users with a single-hand operation mode.

At present, call-out methods of single-hand operation mode mainly comprise key-to-call and slide-to-call. However, on the one hand, whether it is the single-hand operation mode of key-to-call or slide-to-call single-hand operation mode, it is easy to cause mis-operation, and on the other hand, existing single-hand operation mode of the call-out method cannot be based on an user's holding mode to call out the single-hand interface, so that the single-hand interface cannot be adapted to the holding mode, which increases the complexity of single-hand operation and reduces the intelligence of the terminal .

### SUMMARY

Embodiments of the present application provide a method, a terminal, and a computer storage medium for opening a single-hand operation mode. When the single-hand operation mode is turned on, the terminal can effectively avoid the occurrence of mis-operations, and at the same time, the display interface in the single-hand operation mode can be compatible with a gripping mode, thereby reducing the complexity of single-hand operation and improving the intelligence of the terminal.

The technical solutions of the embodiments of the present application are implemented as follows.

In the first aspect, an embodiment of the present application provides a method for turning on a single-hand operation mode. The method comprises detecting a sliding touch operation in a first region and determining a sliding information of the sliding touch operation when a first interface is displayed in a full-screen region, wherein the first region is located on a left side or a right side of the full-screen region;
calling out a single-hand mode hot zone in a second region in response to the sliding touch operation, wherein the second region is another region in the full-screen region that is different from the first region;
turning on a single-hand operation mode when an end of the sliding touch operation is detected through the single-hand mode hot zone; and
displaying the first interface in a third region according to the sliding information based on the single-hand operation mode to realize a single-hand operation, wherein the third region is a partial region in the full-screen region.

In the second aspect, an embodiment of the present application provides a terminal, the terminal comprises a detecting portion, a determining portion, a call-out portion, a turn-on portion, and a display portion, wherein:
the detecting portion is configured to detect a sliding touch operation in a first region when a first interface is displayed in a full-screen region, wherein the first region is located on a left or right side of the full-screen region;
the determining portion is configured to determine a sliding information of the sliding touch operation;
the call-out portion is configured to call out a single-hand mode hot zone in a second region in response to a sliding touch operation, wherein the second region is another region in the full-screen region that is different from the first region;
the turn-on portion is configured to call out the single-hand operation mode when an end of the sliding touch operation is detected through the single-hand mode hot zone; and
the display portion is configured to display the first interface in a third region based on the single-hand operation mode according to the sliding information to realize single-hand operation, wherein the third region is a partial region in the full-screen region

In a third aspect, an embodiment of the present application provides a terminal comprising a processor and a memory storing instructions that are executable for the processor, wherein the above method is implemented when the instructions are executed by the processor.

In a fourth aspect, an embodiment of the present application provides a computer-readable storage medium with a program stored thereon and applied to a terminal, and the above method is implemented when the program is executed by a processor.

In a method for turning on a single-hand operation mode proposed in the embodiment of the present application, detecting a sliding touch operation in a first region and determining a sliding information of the sliding touch operation when a first interface is displayed in a full-screen region, wherein the first region is located on a left side or a right side of the full-screen region; calling out a single-hand mode hot zone in a second region in response to the sliding touch operation, wherein the second region is another region in the full-screen region that is different from the first region; turning on a single-hand operation mode when an end of the sliding touch operation is detected through the single-hand mode hot zone; and displaying the first interface in a third region according to the sliding information based on the single-hand operation mode to realize a single-hand operation, wherein the third region is a partial region in the full-screen region. That is to say, in the embodiment of the present application, after the terminal detects the sliding touch operation in the first region, it can now call out the single-hand mode hot zone in the second region to enable the single-hand operation mode through the single-hand mode hot zone, thereby the sliding information of the sliding touch operation can be used to display the first interface in the third region to realize single-hand operation of the terminal. The terminal does not directly turn on the single-hand operation mode based on the sliding touch operation but uses the hot zone of the single-hand mode to further determine whether to turn on the single-hand operation mode, thereby avoiding the occurrence of mis-operation. Furthermore, the terminal displays the first interface in the single-hand operation mode based on the sliding information of the sliding touch operation. That is, the first interface in the single-hand operation mode has a strong correlation with the user's holding mode. It can be seen that the method for turning on the single-hand operation mode proposed in the present application can not only effectively avoid the occurrence of mis-operation when the single-hand operation mode of the terminal is turned on, but also make uses of the display interface in the single-hand operation mode correspond to the holding mode, thereby reducing the complexity of single-hand operation and improving the intelligence of the terminal.

### DESCRIPTION OF THE DRAWINGS

FIG.1 is a first schematic diagram of an implementation flowchart of a method for turning on a single-hand operation mode.
FIG. 2 is a first schematic diagram of a first region.
FIG. 3 is a second schematic diagram of the first region.
FIG. 4 is a first schematic diagram of a sliding information.
FIG. 5 is a second schematic diagram of the sliding information.
FIG. 6 is a schematic diagram of a second region.
FIG. 7 is a schematic diagram of a hot zone in single-hand mode.
FIG. 8 is a second schematic diagram of an implementation flowchart of a method for turning on a single-hand operation mode.
FIG. 9 is a first schematic diagram of a third region.
FIG. 10 is a second schematic diagram of the third region.
FIG. 11 is a schematic diagram of a single-hand operation mode.
FIG. 12 is a second schematic diagram of the second region.
FIG. 13 is a third schematic diagram of an implementation flowchart of a method for turning on a single-hand operation mode.
FIG. 14 is a schematic diagram of a sliding track.
FIG. 15 is a fourth schematic diagram of an implementation flowchart of a method for turning on a single-hand operation mode.
FIG. 16 is a schematic diagram of a second interface.
FIG. 17 is a fifth schematic diagram of an implementation flowchart of a method for turning on a single-hand operation mode.
FIG. 18 is a sixth schematic diagram of an implementation flowchart of a method for turning on a single-hand operation mode.
FIG. 19 is a first schematic diagram of a composition of a terminal.
FIG. 20 is a second schematic diagram of a composition of a terminal.

### DETAILED DESCRIPTION OF THE ILLUSTRATED EMBODIMENTS

Technical solutions in the embodiments of the present application will be clearly and completely described below in conjunction with the drawings in the embodiments of the present application. It is understandable that the specific embodiments described here are only used to explain the related application, but not to limit the application. In addition, it should be noted that, for ease of description, only the parts related to the relevant application are shown in the drawings.

With continuous developments of the terminal technology, functions and performances of various devices of the terminal have also been greatly improved. For example, a size of a full-screen display screen of the terminal has gradually increased, from 3.5 inches to 6.5 inches, and is now widely used.

Full screen is a relatively broad definition of the mobile phone industry for the design of ultra-high screen-to-body ratio mobile phones. The literal explanation is that all the front of the terminal is a screen, and the four border positions of the terminal are designed without borders, pursuing a screen-to-body ratio close to 100%. However, due to the limitation of technology, the full-screen terminal claimed by the industry is only a terminal with an ultra-high screen-to-body ratio for the time being. There is no terminal that can achieve 100% of the front screen. Most of the common full-screen terminals have an ultra-narrow bezel design and a real screen of a proportion that can reach almost 90%.

On the other hand, with the increase of terminal functions, there are more and more occasions for terminal use. In many scenarios, users often encounter situations where they need to operate the terminal with one hand, for example, using it while walking on the road or waiting for a bus, or using and standing on buses and subways. However, when operating the terminal with one hand, it is difficult for large-screen terminals to touch the entire display screen with fingers. In other words, larger and larger terminal screens cause single-hand operation being difficult.

In order to make full-screen terminals or large-screen terminals meet the needs of users for single-hand operation, the terminal provides users with a single-hand operation mode. Specifically, the single-hand operation mode can be used to facilitate single-hand operation of users by narrowing the page content to a certain region for display.

At present, there are many ways for the terminal to call out the single-hand operation mode. The common ones mainly comprise the button call-out and the slide call-out. Among them, the button call-out is to call out the single-hand operation mode by tapping the physical button twice, and the sliding call-out is to swipe up on the bottom side of the screen to call out the single-hand operation mode.

However, on the one hand, whether it is to call out the single-hand operation mode by pressing the button or sliding out the single-hand operation mode, it is easy to cause mis-operations. For example, the user accidentally touches the physical button, or it is mistakenly recognized as a call-out of a single-hand operation mode when the user is performing other operations on the display screen. On the other hand, a call-out method of the existing single-hand operation mode cannot perform a single-hand interface call-out based on the user's holding mode. That is, when the user holds the terminal with one hand after the terminal activates the single-hand operation mode through the existing call-out method for the single-hand operation mode, there is a problem that the single-hand interface call-out cannot be adapted to the user's holding mode. For example, when the user holds the terminal with the left hand, and the call-out order of the single-hand interface is on the right side of the display screen. At this time, the user needs to change the holding mode or adjust the single-hand interface, which increases the complexity of the single-hand operation and reduces the intelligence of the terminal.

In order to solve the above problems, in the embodiments of the present application, after the terminal detects the sliding touch operation in the first region, it can first call out the single-hand mode hot zone in the second region to activate the single-hand operation mode through the single-hand hot zone. Therefore, the first interface can be displayed in the third region by using the sliding information of the sliding touch operation, so as to realize the single-hand operation of the terminal. The terminal does not directly turn on the single-hand operation mode based on the sliding touch operation but uses the single-hand mode hot zone to further determine whether to turn on the single-hand operation mode, thereby avoiding the occurrence of mis-operation. Furthermore, the terminal displays the first interface in the single-hand operation mode based on the sliding information of the sliding touch operation, that is, the first interface in the single-hand operation mode has a strong correlation with the user's holding mode. It can be seen that the turn-on method of the single-hand operation mode proposed in the present application can not only effectively avoid the occurrence of mis-operation when the single-hand operation mode of the terminal is turned on, but also make adaption of the display interface in the single-hand operation mode correspond to the holding mode, thereby reducing the complexity of single-hand operation and improving the intelligence of the terminal.

It can be seen that the present application provides the user with the ability to quickly enter the single-hand operation mode. The user has obvious certainty when entering the single-hand operation mode, and the region where the interface of the single-hand operation mode appears is strongly consistent with the user's dominant hand, thereby achieving purposes of the user to quickly and clearly enter the single-hand operation mode without relying on the physical button to single-hand, which gives the virtual navigation button more possibilities.

Technical solutions in embodiments of the present application will be clearly and completely described below in conjunction with the drawings in the embodiments of the present application.

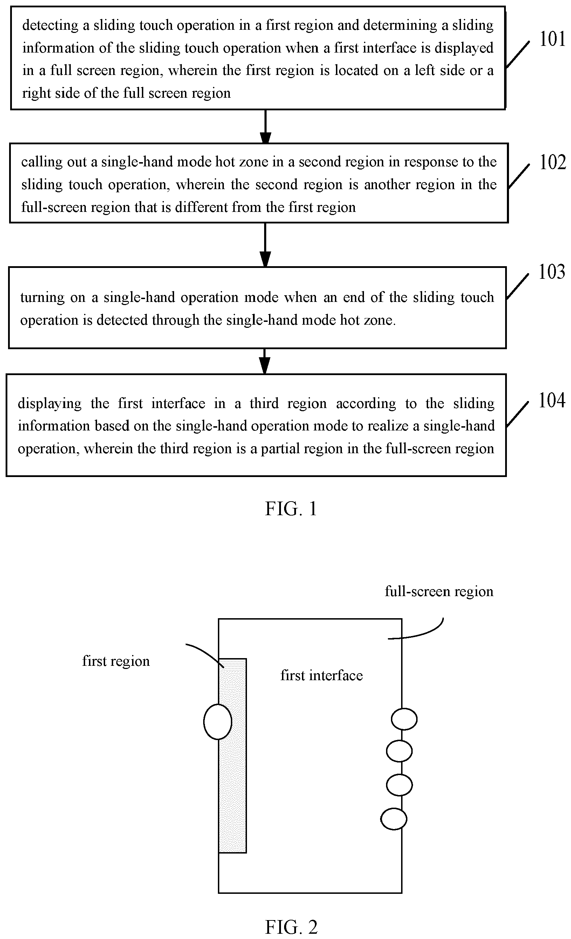

An embodiment of the present application provides a single-hand operation mode opening method. FIG. 1 is a first schematic diagram of an implementation flowchart of a method for turning-on a single-hand operation mode. As shown in FIG. 1, in the embodiment of the present application, a terminal implementing the single-hand operation mode comprises following steps.

Step 101: detecting a sliding touch operation in a first region and determining a sliding information of the sliding touch operation when a first interface is displayed in a full-screen region, wherein the first region is located on a left side or a right side of the full-screen region.

In an embodiment of the present application, when the terminal displays the first interface in the full-screen region, the sliding touch operation can be detected in the first region, and then a sliding information of the sliding touch operation can be determined.

It can be understood that, in an embodiment of the present application, the full-screen region may be an entire region of a display screen of the terminal. That is, the terminal displays the first interface in the full-screen region. That is, the terminal displays the first interface on the entire display screen..

Furthermore, in an embodiment of the present application, the first interface can be either a display interface of any application of the terminal, a system interface of the terminal, or an image or video being played on the terminal. That is, in this application, the first display interface may be any interface that can be displayed by the terminal, and the first display interface is not limited thereto.

It should be noted that in the embodiments of the present application, the aforementioned terminal may be any terminal with communication and storage functions, such as tablet computer, mobile phone, e-reader, remote control, personal computer (PC), notebook Terminals such as computers, in-vehicle devices, internet TVs, wearable devices, personal digital assistants (PDAs), portable media players (PMP), navigation devices, etc.

Specifically, in the present application, the terminal may be configured with a display screen. For example, the terminal may be a large-screen terminal or a full-screen terminal.

Furthermore, in an embodiment of the present application, the terminal may detect a sliding touch operation in the first region. The first region may be on a left or right side of the full-screen region of the terminal. That is, the terminal may detect swipe touch operations on the left and right sides of the display screen on the terminal.

It can be understood that, in the embodiment of the present application, the left and right sides of the full-screen region are determined based on a placement state of the terminal. For different placement states, the left and right sides of the full-screen region of the terminal are different. Specifically, the placement state of the terminal may be a horizontal screen state or a vertical screen state. The left and right sides of the full-screen region in the horizontal screen state are different from the left and right sides of the full-screen region in the vertical screen state. For example, in the horizontal screen state, the left and right sides of the full-screen region are the sides close to the two narrow sides of the terminal. Correspondingly, in the vertical screen state, the left and right sides of the full-screen region are the sides close to the two broad sides of the terminal.

For example, in an embodiment of the present application, FIG. 2 is a first schematic diagram of the first region. As shown in FIG. 2, if the terminal is placed in the vertical screen state, the first region may be located on the left side of the full-screen region. The terminal can detect the sliding touch operation in the left region of the full-screen region of the display screen. For example, in general, when the user holds the terminal with the left hand, he can slide on the left side of the display screen through the left thumb of the left hand, so that the terminal receives the sliding touch operation in the first region on the left side of the full-screen region.

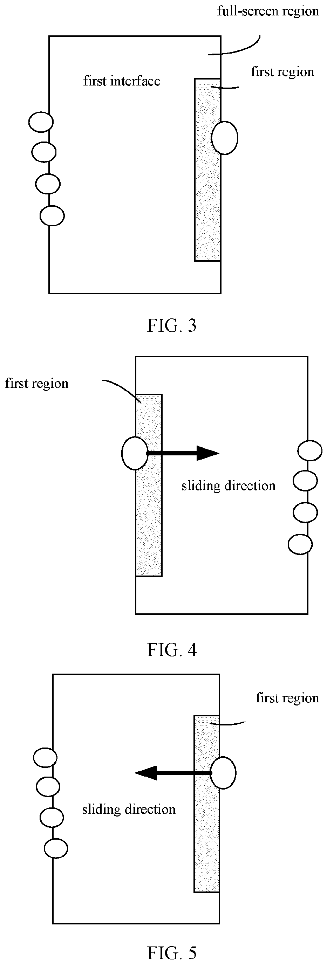

For example, in an embodiment of the present application, FIG. 3 is a second schematic diagram of the first region. As shown in FIG. 3, the terminal can detect the sliding touch operation in the right region of the full-screen region of the display screen. For example, in general, when the user holds the terminal with the right hand, he can slide on the right side of the display screen through the right thumb of the right hand, so that the terminal receives the sliding touch operation in the first region on the left side of the full-screen region.

Furthermore, in an embodiment of the present application, the terminal may determine the sliding information of the sliding touch operation after detecting the sliding touch operation in the first region.

It can be understood that, in an embodiment of the present application, the sliding information of the sliding touch operation may include the sliding direction. Since the terminal detects the sliding touch operation in the first region located on the left or right side of the full-screen region, the sliding direction may be from left to right, or from right to left.

For example, in the embodiment of the present application, FIG. 4 is a first schematic diagram of a sliding information. As shown in FIG. 4, the sliding direction detected by the terminal is from left to right when the first region is located on the left side of the full-screen region of the terminal, that is, the sliding touch operation is sliding from the left to the right of the display screen.

For example, in an embodiment of the present application, FIG. 5 is a second schematic diagram of the sliding information. As shown in FIG. 5, the sliding direction detected by the terminal is from right to left when the first region is located on the right side of the full-screen region of the terminal. That is, the sliding touch operation is sliding from the right to the left of the display screen.

It should be noted that, in the embodiment of the present application, the sliding direction can be left and right sliding along the horizontal direction or left and right sliding based on the horizontal line within a certain angle range, so that the terminal can more accurately determine the sliding information of the sliding touch operation..

It can be understood that, in an embodiment of the present application, the sliding information of the sliding touch operation may also comprise a sliding distance. Among them, the sliding distance can be used to prevent mis-operation. Specifically, the terminal may determine whether to enable the single-hand operation mode by the sliding distance.

Step 102: calling out a single-hand mode hot zone in a second region in response to the sliding touch operation, wherein the second region is another region in the full-screen region that is different from the first region.

In an embodiment of the present application, after the terminal detects the sliding touch operation in the first region and determines the sliding information of the sliding touch operation, it can respond to the sliding touch operation, so as to call out the single-hand mode hot zone in the second region.

It should be noted that, in an embodiment of the present application, the second region may be another region in the full-screen region that is different from the first region. That is, in this application, the second region may be an region that does not completely overlap the first region in the full-screen region.

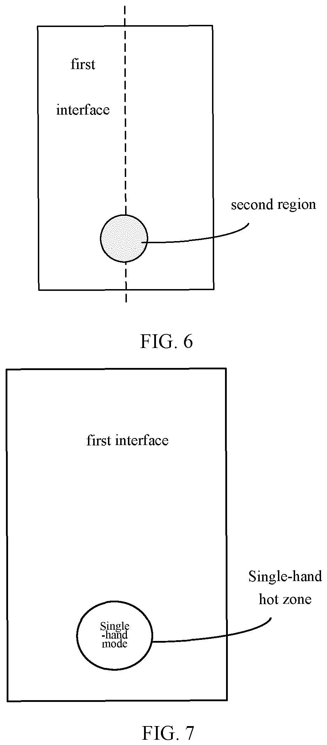

It should be noted that, in an embodiment of the present application, the position of the second region may be predetermined by the terminal, or may be determined by the terminal based on the sliding information of the sliding touch operation. For example, FIG. 6 is a first schematic diagram of the second region. As shown in FIG. 6, the terminal may set the second region on a lower side of the center line in the full-screen region in advance.

Furthermore, in an embodiment of the present application, the single-hand mode hot zone can be used to turn on the single-hand operation mode. Specifically, the function of the single-hand hot zone is equivalent to a switch button, which can be used to respond to click operations or pressing operations. That is to say, the single-hand hot zone is the switch button of the single-hand operation mode. When a click operation or a pressing operation is detected, the terminal can turn on the single-hand operation mode.

FIG. 7 is a schematic diagram of a single-hand mode hot zone. As shown in FIG. 7, the terminal calls out the single-hand mode hot zone in the second region, where the single-hand mode hot zone can be set with a "single-hand mode" logo, so that it can prompt the turn-on of the single-hand operation mode.

Step 103: turning on a single-hand operation mode when an end of the sliding touch operation is detected through the single-hand mode hot zone.

In an embodiment of the present application, after the terminal responds to the sliding touch operation and calls out the single-hand mode hot zone in the second region, the terminal can turn on the single-hand operation model when the end of the sliding touch operation is detected through the single-hand mode hot zone.

Furthermore, in an embodiment of the present application, the terminal can detect the end of the sliding touch operation through the operation track of the sliding touch operation. In other words, the user swipes in the first region to make the terminal detect the sliding touch operation, and after the terminal displays the single-hand mode hot zone, the user continues to slide to the single-hand mode hot zone and then performs a hovering operation, so that the terminal detects the end of the sliding touch operation, thereby turning on the single-hand operation mode.

It can be understood that, in an embodiment of the present application, the terminal turns on the single-hand operation mode through the single-hand mode hot zone, which can effectively avoid the occurrence of mis-operation. In other words, the terminal does not directly turn on the single-hand operation mode after receiving the sliding touch operation, but first displays the single-hand mode hot zone, so that the single-hand mode hot zone can further determine whether to turn on the single-hand operation mode, thereby eliminating mis-operation.

Furthermore, in an embodiment of the present application, the terminal displays the first interface in the third region according to the sliding information based on the single-hand operation mode, so as to realize the single-hand operation. That is, prior to a step 104, the terminal implements the single-hand operation method further comprises following steps.

Step 105: turning on the single-hand operation mode when a click operation or a pressing operation is detected through the single-hand mode hot zone.

In the embodiment of the present application, after the terminal calls out the single-hand hot zone in the second region in response to a sliding touch operation, the terminal can turn on the single-hand operation model when a click operation or a pressing operation is detected through the single-hand hot zone.

It should be noted that, in the embodiment of the present application, when the terminal turns on the single-hand operation mode based on the single-hand mode hot zone, it can also perform the tap operation or pressing operation detection through the single-hand mode hot zone, so as to obtain the instruction for turning on the single-hand operation mode. That is to say, after the terminal detects the sliding touch operation and displays the single-hand hot zone by sliding in the first region, the user presses the single-hand hot zone, or the user clicks on the single-hand hot zone, then the clicking or pressing can be detected through the hot zone of the single-hand mode by the terminal, so that the single-hand operation mode can be turned on.

Step 104: displaying the first interface in a third region according to the sliding information based on the single-hand operation mode to realize a single-hand operation, wherein the third region is a partial region in the full-screen region.

In an embodiment of the present application, when the terminal detects the end of the sliding touch operation through the hot zone of the single-hand mode, and after the single-hand operation mode is turned on, the first interface can be displayed in the third region based on the single-hand operation mode according to the sliding information to realize the single-hand operation.

It can be understood that, in the embodiment of the present application, the third region may be a partial region in the full-screen region. Specifically, the size of the third region can be determined by reducing the size of the full-screen region according to a predetermined ratio.

Furthermore, in an embodiment of the present application, the third region may be determined by the terminal based on the sliding information of the sliding touch operation. That is, the third region is related to the sliding touch operation. Specifically, the terminal may determine the third region according to the sliding direction of the sliding touch operation.

It should be noted that in an embodiment of the present application, after the single-hand operation mode is turned on, the terminal can use the single-hand operation mode to determine the third region according to the sliding information of the sliding touch operation, and then the first interface is displayed in the third region. Thus, the first interface displayed in the third region can realize single-hand operation of the terminal.

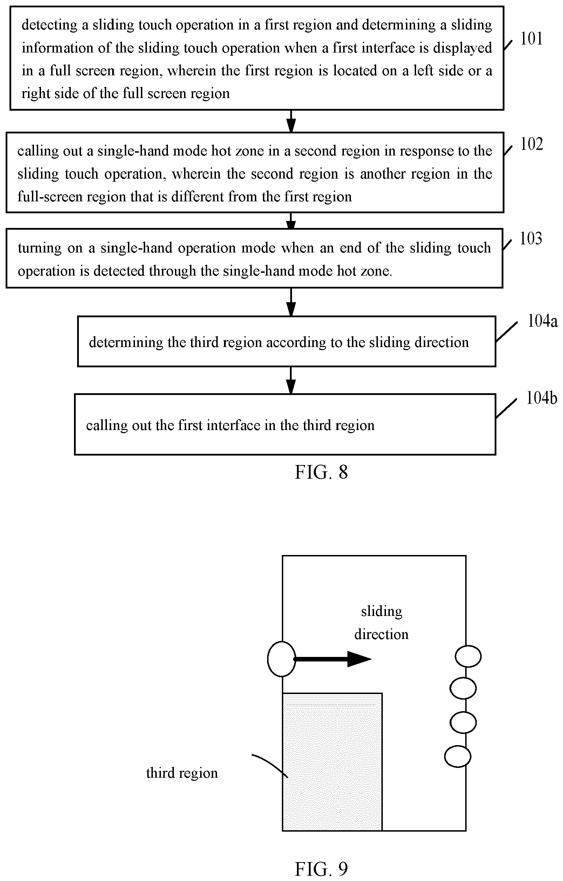

FIG. 8 is a second schematic diagram of the implementation flowchart of the method for turning on the single-hand operation mode. As shown in FIG. 8, displaying the first interface in the third region according to the sliding information based on the single-hand operation mode of the terminal may comprise following steps.

Step 104a: determining the third region according to the sliding direction.

In an embodiment of the present application, when the terminal detects the end of the sliding touch operation through the hot zone of the single-hand mode, and after the single-hand operation mode is turned on, the third region may be determined according to the sliding direction of the sliding touch operation.

Furthermore, in an embodiment of the present application, since the sliding direction can be from left to right, or from right to left, the terminal can set the third region to the left or right side of the full-screen region based on the sliding direction. Specifically, if the sliding direction is from left to right, the terminal can determine the third region at the bottom left of the full-screen region. Correspondingly, if the sliding direction is from right to left, the terminal can determine the third region at the bottom right of the full-screen region.

FIG. 9 is a first schematic diagram of the third region. As shown in FIG. 9, if the direction of the sliding touch operation is from left to right, then it can be considered that the user is holding the terminal with the left hand, so the third region can be set on the left side of the display screen, which can facilitate the user's left hand touch operation. Specifically, the third region may be set to the lower left side of the full-screen region.

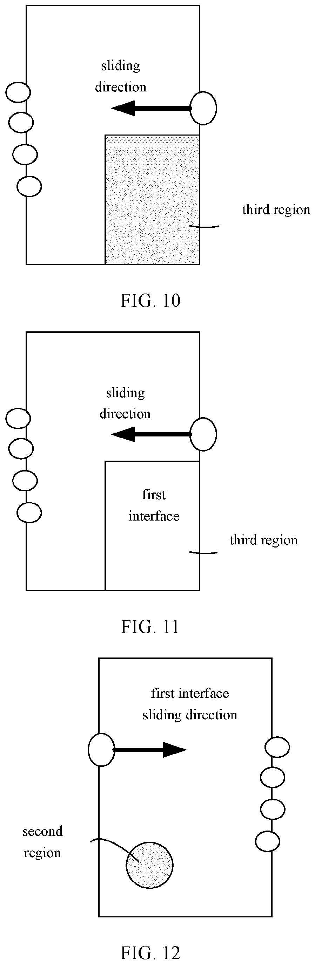

FIG. 10 is a second schematic diagram of the third region. As shown in FIG. 10, if the direction of the sliding touch operation is from right to left, then the user can be considered that the user is holding the terminal with the right hand, so the third region can be set on the right side of the display screen, which can facilitate the user's right hand touch operation. Specifically, the third region may be set to the lower right side of the full-screen region.

Step 104b: calling out the first interface in the third region.

In the embodiment of the present application, after the terminal uses the sliding information to determine the third region in the full-screen region, it can single-hand the first interface in the third region, so that the user can perform touch processing to the first interface in the third region and realize the single-hand operation of the terminal.

FIG. 11 is a schematic diagram of the single-hand operation mode. As shown in FIG. 11, if the direction of the sliding touch operation is from right to left, the terminal can display the first interface in the third region located at the lower right side of the full-screen region, which is convenient for touch operations of the users who hold the terminal by the right hand.

It can be seen that, in this application, the terminal sets the third region based on the sliding direction of the sliding touch operation, so that strong correlation of the first interface of the third region can be displayed in the single-hand operation mode. Specifically, based on the sliding information of the sliding touch operation, the terminal has obvious certainty about the display mode of the first interface after the single-hand operation mode is turned on. That is, the third region is selected based on the user's holding mode, so that the single-hand operation mode is selected. There is strong continuity between the third region displayed on the first interface in the hand operation mode and the user's holding mode.

In a method for turning on a single-hand operation mode proposed in the embodiment of the present application, detecting a sliding touch operation in a first region and determining a sliding information of the sliding touch operation when a first interface is displayed in a full-screen region, wherein the first region is located on a left side or a right side of the full-screen region; calling out a single-hand mode hot zone in a second region in response to the sliding touch operation, wherein the second region is another region in the full-screen region that is different from the first region; turning on a single-hand operation mode when an end of the sliding touch operation is detected through the single-hand mode hot zone; and displaying the first interface in a third region according to the sliding information based on the single-hand operation mode to realize a single-hand operation, wherein the third region is a partial region in the full-screen region. That is to say, in the embodiment of the present application, after the terminal detects the sliding touch operation in the first region, it can now call out the single-hand mode hot zone in the second region to enable the single-hand operation mode through the single-hand mode hot zone, thereby the sliding information of the sliding touch operation can be used to display the first interface in the third region to realize single-hand operation of the terminal. The terminal does not directly turn on the single-hand operation mode based on the sliding touch operation but uses the hot zone of the single-hand mode to further determine whether to turn on the single-hand operation mode, thereby avoiding the occurrence of mis-operation. Furthermore, the terminal displays the first interface in the single-hand operation mode based on the sliding information of the sliding touch operation. That is, the first interface in the single-hand operation mode has a strong correlation with the user's holding mode. It can be seen that the method for turning on the single-hand operation mode proposed in the present application can not only effectively avoid the occurrence of mis-operation when the single-hand operation mode of the terminal is turned on, but also make uses of the display interface in the single-hand operation mode correspond to the holding mode, thereby reducing the complexity of single-hand operation and improving the intelligence of the terminal.

Based on the above-mentioned embodiment, in another embodiment of the present application, in response to the sliding touch operation, the terminal calls out the single-hand mode hot zone in the second region prior to calling out the single-hand mode hot zone. That is, prior to the step 102, the method for the terminal to implement single-hand operation may also comprises following step:

Step 106: determining whether the sliding distance is not less than a distance threshold.

Step 107: determining that the sliding touch operation satisfies the condition for calling out the single-hand mode hot zone if the sliding distance is greater than or equal to the distance threshold, it is.

In an embodiment of the present application, after the terminal detects the sliding touch operation in the first region and determines the sliding information of the sliding touch operation, it may first use the sliding information to determine whether to call out the hot zone in the single-hand mode.

Furthermore, in the embodiment of the present application, after determining the sliding distance of the sliding touch operation, the terminal may first use the sliding distance to determine whether the conditions for exhaling the hot zone of the single-hand mode are met. It is used to determine whether to call out the single-hand mode hot zone, so as to avoid mis-operation. Specifically, the terminal may compare the sliding distance with a distance threshold, so as to determine whether the sliding touch operation satisfies the condition for calling out the hot zone of the single-hand mode according to the comparison result.

For example, in an embodiment of the present application, if the comparison result is that the sliding distance is greater than or equal to the distance threshold, the terminal may determine that the sliding touch operation satisfies the condition for calling out the single-hand mode hot zone and may respond to the sliding touch operation to call out the single-hand mode hot zone in the second region. That is, the step 102 can be performed.

Correspondingly, in this application, if the comparison result is that the sliding distance is less than the distance threshold, the terminal can determine that the sliding touch operation does not meet the conditions for calling out the single-hand hot zone, and it will not call out the single-hand hot spot in the second region.

In the embodiment of the present application, further, prior to the terminal calls out the single-hand mode hot zone in the second region in response to the sliding touch operation, that is, prior to the step 102, the method for the terminal to implement single-hand operation may further comprises following step.

Step 108: Determine a second region in the full-screen region according to the sliding direction.

In the embodiment of the present application, after the terminal detects the sliding touch operation in the first region and determines the sliding information of the sliding touch operation, it may first determine the second region in the full-screen region according to the sliding direction.

It can be understood that, in the embodiment of the present application, the position of the second region may be predetermined by the terminal or may be determined by the terminal based on the sliding information of the sliding touch operation. Specifically, the terminal may determine the second region based on the sliding direction of the sliding touch operation. That is, the second region may be determined by the terminal based on the sliding information of the sliding touch operation. That is, the second region is related to the sliding touch operation.

Furthermore, in the embodiment of the present application, since the sliding direction can be from left to right, or from right to left, the terminal can set the second region to the left or right of the full-screen region based on the sliding direction. side. Specifically, if the sliding direction is from left to right, the terminal can determine the second region at the bottom left of the full-screen region; correspondingly, if the sliding direction is from right to left, the terminal can determine the second region at the bottom right of the full screen region.

FIG. 12 is a second schematic diagram of the second region. As shown in FIG. 12, if the direction of the sliding touch operation is from left to right, then the user can be considered as holding the terminal with the left hand, so the second region can be set on the left side of the display screen, which can facilitate the user's left hand touch operation.

It is understandable that in this application, if the direction of the sliding touch operation is from right to left, then it can be considered that the user is holding the terminal with his right hand. Therefore, a second region can be set on the right side of the display screen to facilitate the user's right hand. Perform a touch operation.

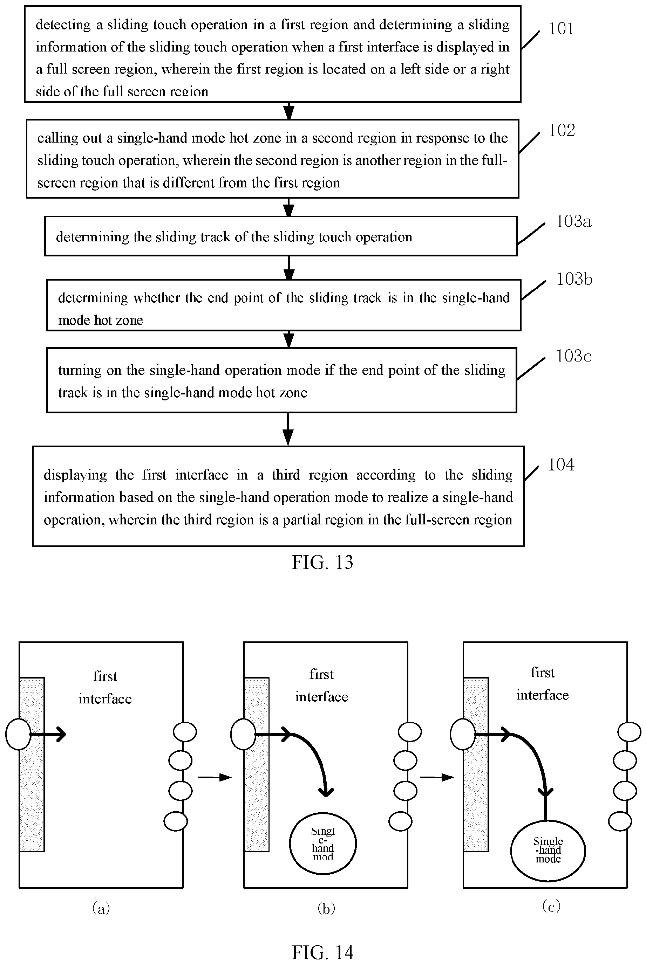

In the embodiment of the present application, further, FIG. 13 is a third schematic diagram of the method for turning on the single-hand operation mode opening. As shown in FIG. 13, when the end of the sliding touch operation is detected through the single-hand mode hot zone. The method of single-hand operation mode may comprise following steps.

Step 103a: determining the sliding track of the sliding touch operation.

Step 103b: determining whether the end point of the sliding track is in the single-hand mode hot zone.

Step 103c: turning on the single-hand operation mode if the end point of the sliding track is in the single-hand mode hot zone.

In an embodiment of the present application, after the terminal detects the sliding touch operation in the first region and determines the sliding information of the sliding touch operation, it can continue to detect the sliding touch operation, so that the sliding track of the sliding touch operation can be determined. Then, the sliding track can be used to determine whether the sliding touch operation is over.

It should be noted that, in the embodiment of the present application, since the sliding touch operation may last for a period of time, the sliding track of the sliding touch operation detected by the terminal may be a straight line or a curve of any length.

Correspondingly, in the embodiment of the present application, after determining the sliding track of the sliding touch operation, the terminal may further determine whether the track end of the sliding track is in the single-hand mode hot zone. Specifically, the terminal may determine the coordinate data of the end of the track, and then use the coordinate data to determine whether the end of the track is in the single-hand mode hot zone.

Furthermore, in the embodiment of the present application, if the terminal determines that the end of the sliding track is in the single-hand mode hot zone, the terminal considers that the end of the sliding touch operation is detected through the hot zone of the single-hand mode, that is, the end of the sliding touch operation can be detected by the single-hand hot zone. The mode hot zone determines that the sliding touch operation has ended, so the terminal can turn on the single-hand operation mode.

For example, in this application, if the end point of the sliding track is in the single-hand mode hot zone, and the terminal detects the hovering operation through the single-hand mode hot zone, the terminal may determine the single-hand mode hot zone to determine the sliding touch operation It's over, so the terminal can turn on single-hand operation mode.

In other words, after the user slides in the first region so that the terminal detects the sliding touch operation, the sliding touch operation can be continued, and after the terminal displays the single-hand mode hot zone, the user continues to slide to the single-hand mode hot zone, and then lift the hand stops the sliding touch operation, so that the terminal detects the end of the sliding touch operation through the hot zone of the single-hand mode, and then the single-hand operation mode can be turned on.

FIG. 14 is a schematic diagram of the sliding track. As shown in FIG. a, b, and c in FIG. 14, the terminal uses the sliding track to implement the single-hand operation mode opening based on the single-hand hot zone, and the terminal receives continuous Swipe touch operation. That is to say, in the embodiment of the present application, one implementation manner for the terminal to enable the single-hand operation mode is: after the terminal detects the user's sliding on both sides of the display screen, it calls out the single-hand mode hot zone, and the user continues the sliding touch operation, and stop the sliding touch operation at the hot zone in the single-hand mode. After the terminal detects the end of the sliding touch operation through the hot zone in the single-hand mode, the single-hand operation mode can be turned on.

It is understandable that in the embodiment of the present application, the terminal detects the end of the sliding touch operation in the single-hand mode hot zone through the end of the sliding track, and then turns on the single-hand operation mode, which can effectively avoid the occurrence of mis-operations. In other words, the terminal does not directly turn on the single-hand operation mode after receiving the sliding touch operation, but first displays the single-hand mode hot zone, so that the single-hand mode hot zone can further determine whether to turn on the single-hand operation mode, thereby eliminating the mis-operation.

In a method for turning on a single-hand operation mode proposed in the embodiment of the present application, detecting a sliding touch operation in a first region and determining a sliding information of the sliding touch operation when a first interface is displayed in a full-screen region, wherein the first region is located on a left side or a right side of the full-screen region; calling out a single-hand mode hot zone in a second region in response to the sliding touch operation, wherein the second region is another region in the full-screen region that is different from the first region; turning on a single-hand operation mode when an end of the sliding touch operation is detected through the single-hand mode hot zone; and displaying the first interface in a third region according to the sliding information based on the single-hand operation mode to realize a single-hand operation, wherein the third region is a partial region in the full-screen region. That is to say, in the embodiment of the present application, after the terminal detects the sliding touch operation in the first region, it can now call out the single-hand mode hot zone in the second region to enable the single-hand operation mode through the single-hand mode hot zone, thereby the sliding information of the sliding touch operation can be used to display the first interface in the third region to realize single-hand operation of the terminal. The terminal does not directly turn on the single-hand operation mode based on the sliding touch operation but uses the hot zone of the single-hand mode to further determine whether to turn on the single-hand operation mode, thereby avoiding the occurrence of mis-operation. Furthermore, the terminal displays the first interface in the single-hand operation mode based on the sliding information of the sliding touch operation. That is, the first interface in the single-hand operation mode has a strong correlation with the user's holding mode. It can be seen that the method for turning on the single-hand operation mode proposed in the present application can not only effectively avoid the occurrence of mis-operation when the single-hand operation mode of the terminal is turned on, but also make uses of the display interface in the single-hand operation mode correspond to the holding mode, thereby reducing the complexity of single-hand operation and improving the intelligence of the terminal.

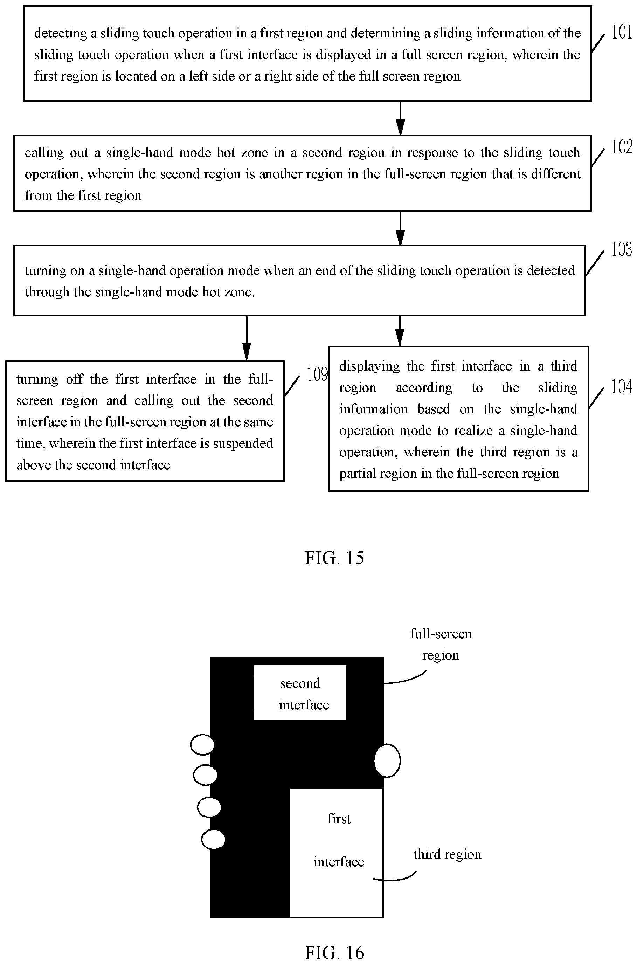

Based on the above-mentioned embodiments, in another embodiment of the present application, FIG. 15 is a fourth schematic diagram of the implementation flowchart of a method for turning on a single-hand operation mode. As shown in FIG. 15, when the end of the sliding touch operation is detected through the hot zone of the single-hand mode When the terminal turns on the single-hand operation mode, that is, after step 103, the method for the terminal to realize single-hand operation may further comprising following steps.

Step 109: turning off the first interface in the full-screen region and calling out the second interface in the full-screen region at the same time, wherein the first interface is suspended above the second interface.

In the embodiment of the present application, when the end of the sliding touch operation is detected through the single-hand mode hot zone, the terminal can close the first interface in the full-screen region after the single-hand operation mode is turned on, and at the same time, the second interface can be called in the full-screen region.

It is understandable that, in the embodiment of the present application, while the terminal displays the first interface in the third region according to the sliding information, the first interface needs to be closed in the full-screen region, so that the first interface will not be repeatedly displayed.

For example, in the embodiment of the present application, the first interface may be displayed above the second interface.

It should be noted that, in the embodiment of the present application, the second interface may be any interface predetermined by the terminal that is different from the first interface. For example, in this application, FIG. 16 is a schematic diagram of the second interface. As shown in FIG. 16, after the single-hand operation mode is turned on, the terminal may display the first interface in the third region while the second interface is displayed in the full-screen region. Preferably, the second interface may be a black display interface.

Furthermore, in the embodiment of the present application, when the end of the sliding touch operation is detected through the single-hand mode hot zone, the terminal can close the first interface in the full-screen region after the single-hand operation mode is turned on, and at the same time, the first interface can be turned off in the full-screen region and calls out the second interface in the full-screen region.

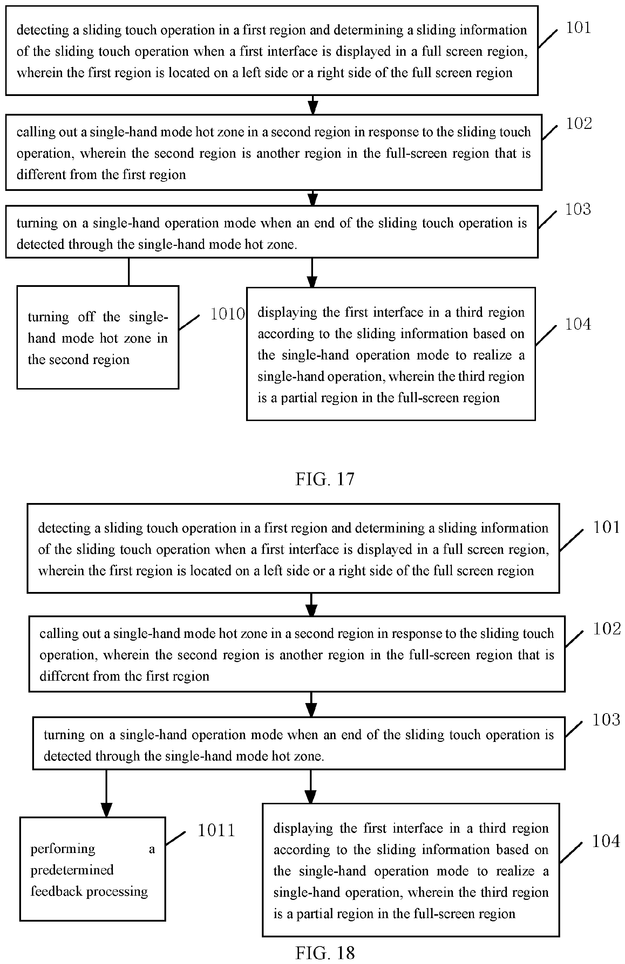

In the embodiment of the present application, further, FIG. 17 is a fifth schematic diagram of the implementation flowchart of a method for turning on a single-hand operation mode opening. As shown in FIG. 17, when the end of the sliding touch operation is detected through the single-hand mode hot zone, the terminal is in after the single-hand operation mode is turned on, that is, after step 103, the method for the terminal to implement single-hand operation may further comprise following steps.

Step 1010: turning off the single-hand mode hot zone in the second region.

In the embodiment of the present application, when the end of the sliding touch operation is detected through the single-hand mode hot zone, the terminal may close the single-hand mode hot zone in the second region after the single-hand operation mode is turned on.

It is understandable that, in the embodiment of the present application, while the terminal displays the first interface in the third region according to the sliding information, it needs to turn off the single-hand mode hot zone in the second region, so that the hot zone in the second region and the first region need to be turned off. When the three regions overlap, avoid blocking the first display interface by the hot zone in the single-hand mode.

Further, in the embodiment of the present application, when the end of the sliding touch operation is detected through the single-hand mode hot zone, the terminal may close the single-hand mode hot zone in the second region after the single-hand operation mode is turned on.

In the embodiment of the present application, further, FIG. 18 is a sixth schematic diagram of the implementation flowchart of a method for turning on a single-hand operation mode opening. As shown in FIG. 18, when the end of the sliding touch operation is detected through the single-hand mode hot zone, the terminal is in after the single-hand operation mode is turned on, that is, after step 103, the method for the terminal to implement single-hand operation may further comprise following steps:

Step 1011, performing a predetermined feedback processing.

In the embodiment of the present application, when the end of the sliding touch operation is detected through the single-hand mode hot zone, the terminal may perform the predetermined feedback processing after the single-hand operation mode is turned on. Among them, the predetermined feedback processing is used to prompt the activation of the single-hand operation mode.

It can be understood that, in the embodiment of the present application, the terminal may set multiple feedback mechanisms. That is, the predetermined feedback processing may be multiple different processing methods. For example, when the terminal performs the predetermined feedback processing, the single-hand operation mode can be prompted through vibration feedback; the single-hand operation mode can also be prompted through the sound feedback. The single-hand operation mode can be prompted through the light feedback.

Furthermore, in the embodiment of the present application, when the end of the sliding touch operation is detected through the single-hand mode hot zone, the terminal may execute the predetermined feedback processing after the single-hand operation mode is turned on.

In the embodiment of the present application, further, the single-hand operation mode opening method proposed in the present application can be inherited from the two-sided sliding navigation interaction of ColorOS, and a single-hand mode that is easy for users to accept is derived from this coherent interactive scene. Entry way. Among them, the interaction of sliding navigation on both sides is through the sliding gestures on both sides, that is, sliding inward on the left side or the lower right side of the screen, to realize the call-out function of the corresponding navigation bar.

That is to say, the method for turning on a single-hand operation mode of the present application is a method for quickly calling out the single-hand operation mode based on the sliding gesture navigation key on both sides of the terminal. The user can trigger the sliding gesture on both sides while moving the finger to you can choose to enter the single-hand operation mode by keeping the hovering motion at the bottom of the phone screen. Through the user's habit of sliding gestures on both sides, this application can choose to enter the single-hand operation mode while triggering the navigation bar, which greatly improves the efficiency of the user's use of the terminal during the commuting period. The terminal is better used in most scenarios, which facilitates the user's work and life.

In a method for turning on a single-hand operation mode proposed in the embodiment of the present application, detecting a sliding touch operation in a first region and determining a sliding information of the sliding touch operation when a first interface is displayed in a full-screen region, wherein the first region is located on a left side or a right side of the full-screen region; calling out a single-hand mode hot zone in a second region in response to the sliding touch operation, wherein the second region is another region in the full-screen region that is different from the first region; turning on a single-hand operation mode when an end of the sliding touch operation is detected through the single-hand mode hot zone; and displaying the first interface in a third region according to the sliding information based on the single-hand operation mode to realize a single-hand operation, wherein the third region is a partial region in the full-screen region. That is to say, in the embodiment of the present application, after the terminal detects the sliding touch operation in the first region, it can now call out the single-hand mode hot zone in the second region to enable the single-hand operation mode through the single-hand mode hot zone, thereby the sliding information of the sliding touch operation can be used to display the first interface in the third region to realize single-hand operation of the terminal. The terminal does not directly turn on the single-hand operation mode based on the sliding touch operation but uses the hot zone of the single-hand mode to further determine whether to turn on the single-hand operation mode, thereby avoiding the occurrence of mis-operation. Furthermore, the terminal displays the first interface in the single-hand operation mode based on the sliding information of the sliding touch operation. That is, the first interface in the single-hand operation mode has a strong correlation with the user's holding mode. It can be seen that the method for turning on the single-hand operation mode proposed in the present application can not only effectively avoid the occurrence of mis-operation when the single-hand operation mode of the terminal is turned on, but also make uses of the display interface in the single-hand operation mode correspond to the holding mode, thereby reducing the complexity of single-hand operation and improving the intelligence of the terminal.

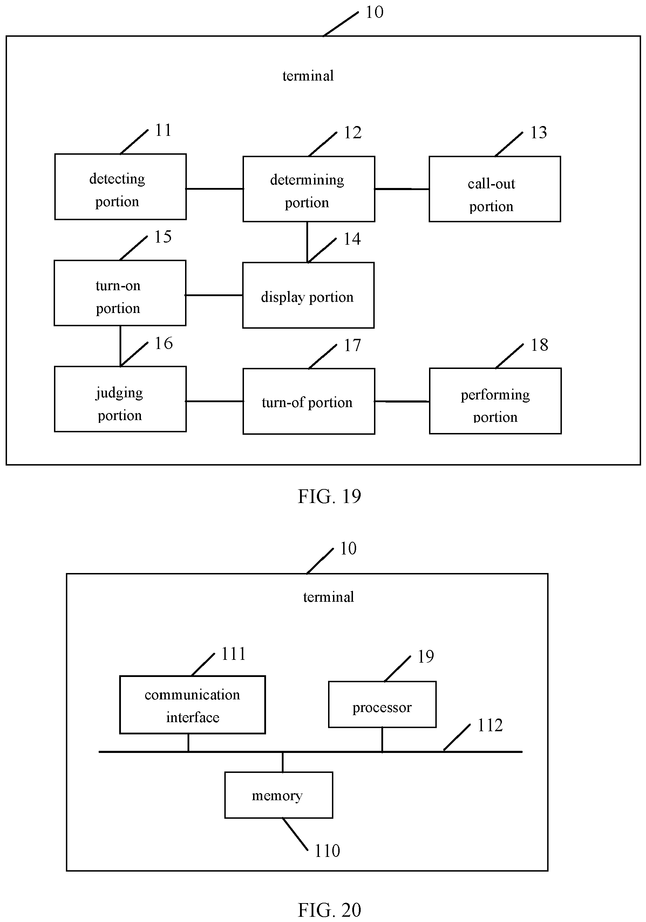

Based on the foregoing embodiments, in another embodiment of the present application, FIG. 19 is a schematic diagram of a composition structure of a terminal. As shown in FIG. 19, a terminal 10 proposed in this embodiment of the present application may comprising a detecting portion 11, a determining portion 12, a call-out portion 13, a turn-on portion 14, a display portion 15, a judging portion 16, a turn-of portion 17 and a performing portion 18.

The detecting 11 portion is configured to detect a sliding touch operation in a first region when a first interface is displayed in a full-screen region, wherein the first region is located on a left or right side of the full-screen region.

The determining portion 12 is configured to determine a sliding information of the sliding touch operation.

The call-out portion 13 is configured to call out a single-hand mode hot zone in a second region in response to a sliding touch operation, wherein the second region is another region in the full-screen region that is different from the first region.

The turn-on portion 14 is configured to activate the single-hand operation mode when an end of the sliding touch operation is detected through the single-hand mode hot zone.

The display portion 15 is configured to display the first interface in a third region based on the single-hand operation mode according to the sliding information to realize single-hand operation, wherein the third region is a partial region in the full-screen region.

Furthermore, in an embodiment of the present application, the sliding information comprises a sliding direction and a sliding distance.

Further, in the embodiment of the present application, the judging portion 16 is configured to, in response to the sliding touch operation, determine whether the sliding distance is not less than a distance threshold prior to the single-hand mode hot zone is called out in the second region; if the sliding distance is greater than or equal to the distance threshold, it is determined that the sliding touch operation satisfies the condition for calling out the single-hand hot zone.

Furthermore, in the embodiment of the present application, the determining portion 12 is further configured to respond to the sliding touch operation, prior to calling out the single-hand mode hot zone in the second region, to determine the second region within the full-screen region according to the sliding direction.

Furthermore, in the embodiment of the present application, the turn on portion 14 is specifically configured to determine the sliding track of the sliding touch operation; determine whether the track end point of the sliding track is in the single-hand mode hot zone. If the end point of the sliding track is in the single-hand mode hot zone, the single-hand operation mode is turned on.

Furthermore, in the embodiment of the present application, the opening portion 14 is specifically configured to display the first interface in the third region according to the sliding information based on the single-hand operation mode, so as to realize the single-hand operation prior to a click operation or a pressing operation is detected through the single-hand mode hot zone, and the single-hand operation mode is turned on.

Furthermore, in the embodiment of the present application, the display portion 15 is specifically configured to determine the third region according to the sliding direction; and call out the first interface in the third region.

Further, in the embodiment of the present application, the display portion 15 is further specifically configured to determine the third region at the lower left of the full-screen region if the sliding direction is from left to right. If the sliding direction is from right to left, the third region is determined at the lower right of the full-screen region.

Furthermore, in the embodiment of the present application, the turn off portion 17 is configured to close the first interface in the full-screen region after the single-hand operation mode is turned on.

The call-out portion 13 is also configured to call out a second interface in the full-screen region, wherein the first interface is suspended above the second interface.

Furthermore, in the embodiment of the present application, the turn off portion 17 is further configured to close the single-hand mode hot zone in the second region after the single-hand operation mode is turned on.

Furthermore, in the embodiment of the present application, the execution part 18 is configured to execute predetermined feedback processing after the single-hand operation mode is turned on.

FIG. 20 is a second schematic diagram of a terminal structur. As shown in FIG. 20, the terminal 10 proposed in the embodiment of the present application may further comprise a processor 19 and a memory 110 storing executable instructions of the processor 19. Further, the terminal 10 may also It includes a communication interface 111 and a bus 112 for connecting the processor 19, the memory 110, and the communication interface 111.

In the embodiment of the present application, the aforementioned processor 19 may be at least one of an application specific integrated circuit (ASIC), a digital signal processor (DSP), a digital signal processing device (DSPD), a programmable logic device (PLD), a field programmable gate array (FPGA), a central processing Unit (CPU), a controller, a microcontroller, and a microprocessor. It is understandable that, for different devices, the electronic devices used to implement the above-mentioned processor functions may also be other, which is not specifically limited in the embodiment of the present application. The terminal 10 may also comprises a memory 110, which may be connected to the processor 19, wherein the memory 110 is used to store executable program codes, the program codes including computer operation instructions, the memory 110 may include high-speed RAM memory, or may also include Non-volatile memory, for example, at least two disk memories.

In the embodiment of the present application, the bus 112 is used to connect the communication interface 111, the processor 19, and the memory 110, and to communicate with each other among these devices.

In the embodiment of the present application, the memory 110 is used to store instructions and data.

Further, in the embodiment of the present application, the above-mentioned processor 19 is configured to detect a sliding touch operation in the first region when the first interface is displayed in the full-screen region, and determine the sliding information of the sliding touch operation; The first region is located on the left or right side of the full-screen region; in response to the sliding touch operation, the single-hand mode hot zone is called out in the second region; wherein, the second region is the one in the full-screen region. Other regions different from the first region; when the end of the sliding touch operation is detected through the single-hand mode hot zone, the single-hand operation mode is turned on; based on the single-hand operation mode, according to the sliding information The first interface is displayed in a third region to realize single-hand operation; wherein, the third region is a partial region in the full-screen region.

In practical applications, the aforementioned memory 110 may be a volatile memory, such as a random-access memory (RAM), or a non-volatile memory (non-volatile memory), such as a read-only memory (ROM), flash memory, hard disk (HDD) or solid-state drive (SSD); or a combination of the above types of memory, and instructions and data are provided to the processor 19.

In addition, the functional modules in this embodiment may be integrated into one processing unit, or each unit may exist alone physically, or two or more units may be integrated into one unit. The above-mentioned integrated unit can be realized in the form of hardware or software function module.

If the integrated unit is implemented in the form of a software function module and is not sold or used as an independent product, it can be stored in a computer readable storage medium. Based on this understanding, the technical solution of this embodiment is essentially or correct the part that the prior art contributes or all or part of the technical solution can be embodied in the form of a software product. The computer software product is stored in a storage medium and includes several instructions to enable a computer device (which can be a computer, a server, or a network device, etc.) or a processor execute all or part of the steps of the method in this embodiment. The aforementioned storage media include U disk, mobile hard disk, read only memory (ROM), random access memory (RAM), magnetic disk or optical disk and other media that can store program codes.

An embodiment of the present application proposes a terminal, detecting a sliding touch operation in a first region and determining a sliding information of the sliding touch operation when a first interface is displayed in a full-screen region, wherein the first region is located on a left side or a right side of the full-screen region; calling out a single-hand mode hot zone in a second region in response to the sliding touch operation, wherein the second region is another region in the full-screen region that is different from the first region; turning on a single-hand operation mode when an end of the sliding touch operation is detected through the single-hand mode hot zone; and displaying the first interface in a third region according to the sliding information based on the single-hand operation mode to realize a single-hand operation, wherein the third region is a partial region in the full-screen region. That is to say, in the embodiment of the present application, after the terminal detects the sliding touch operation in the first region, it can now call out the single-hand mode hot zone in the second region to enable the single-hand operation mode through the single-hand mode hot zone, thereby the sliding information of the sliding touch operation can be used to display the first interface in the third region to realize single-hand operation of the terminal. The terminal does not directly turn on the single-hand operation mode based on the sliding touch operation but uses the hot zone of the single-hand mode to further determine whether to turn on the single-hand operation mode, thereby avoiding the occurrence of mis-operation. Furthermore, the terminal displays the first interface in the single-hand operation mode based on the sliding information of the sliding touch operation. That is, the first interface in the single-hand operation mode has a strong correlation with the user's holding mode. It can be seen that the method for turning on the single-hand operation mode proposed in the present application can not only effectively avoid the occurrence of mis-operation when the single-hand operation mode of the terminal is turned on, but also make uses of the display interface in the single-hand operation mode correspond to the holding mode, thereby reducing the complexity of single-hand operation and improving the intelligence of the terminal.

The embodiment of the present application provides a computer-readable storage medium on which a program is stored, and when the program is executed by a processor, the method for turning on a single-hand operation mode described above is realized.

Specifically, the program instructions corresponding to the single-hand operation mode opening method in this embodiment can be stored on storage media such as optical disks, hard disks, and USB flash drives. When the corresponding program instruction is read or executed by an electronic device, the following steps are included:

When the first interface is displayed in the full-screen region, detecting a sliding touch operation in the first region, and determining the sliding information of the sliding touch operation; wherein the first region is located on the left or right side of the full-screen region.

In response to the sliding touch operation, call out the single-hand mode hot zone in the second region; wherein, the second region is another region in the full-screen region that is different from the first region.

When the end of the sliding touch operation is detected through the single-hand mode hot zone, the single-hand operation mode is turned on.

Based on the single-hand operation mode, the first interface is displayed in a third region according to the sliding information to realize single-hand operation; wherein, the third region is a partial region in the full-screen region.

Those skilled in the art should understand that the embodiments of the present application can be provided as a method, a terminal, or a computer program product. Therefore, this application may adopt the form of hardware embodiments, software embodiments, or embodiments combining software and hardware. Moreover, this application may adopt the form of a computer program product implemented on one or more computer-usable storage media (including but not limited to disk storage, optical storage, etc.) containing computer-usable program codes.

This application is described with reference to the schematic diagrams and/or block diagrams of the methods, devices (systems), and computer program products according to the embodiments of the application. It should be understood that each process and/or block in the schematic flow diagram and/or block diagram can be realized by computer program instructions, and the combination of processes and/or blocks in the schematic flow diagram and/or block diagram can be realized. These computer program instructions can be provided to the processor of a general-purpose computer, a special-purpose computer, an embedded processor, or other programmable data processing equipment to generate a machine, so that the instructions executed by the processor of the computer or other programmable data processing equipment are generated It is a device for realizing the functions specified in one or more processes in the schematic flow chart and/or one block or more blocks in the block diagram.

These computer program instructions can also be stored in a computer-readable memory that can guide a computer or other programmable data processing equipment to work in a specific manner, so that the instructions stored in the computer-readable memory produce an article of manufacture including the instruction device. The device realizes the functions specified in one or more processes in the schematic diagram and/or one block or more in the block diagram.

These computer program instructions can also be loaded on a computer or other programmable data processing equipment, so that a series of operation steps are executed on the computer or other programmable equipment to produce computerimplemented processing, so as to execute on the computer or other programmable equipment. The instructions provide steps for implementing functions specified in one or more processes in the schematic diagram and/or one block or more in the block diagram.

The above are only preferred embodiments of the present application and are not used to limit the protection scope of the present application.

### INDUSTRIAL APPLICABILITY

In a method for turning on a single-hand operation mode proposed in the embodiment of the present application, detecting a sliding touch operation in a first region and determining a sliding information of the sliding touch operation when a first interface is displayed in a full-screen region, wherein the first region is located on a left side or a right side of the full-screen region; calling out a single-hand mode hot zone in a second region in response to the sliding touch operation, wherein the second region is another region in the full-screen region that is different from the first region; turning on a single-hand operation mode when an end of the sliding touch operation is detected through the single-hand mode hot zone; and displaying the first interface in a third region according to the sliding information based on the single-hand operation mode to realize a single-hand operation, wherein the third region is a partial region in the full-screen region. That is to say, in the embodiment of the present application, after the terminal detects the sliding touch operation in the first region, it can now call out the single-hand mode hot zone in the second region to enable the single-hand operation mode through the single-hand mode hot zone, thereby the sliding information of the sliding touch operation can be used to display the first interface in the third region to realize single-hand operation of the terminal. The terminal does not directly turn on the single-hand operation mode based on the sliding touch operation but uses the hot zone of the single-hand mode to further determine whether to turn on the single-hand operation mode, thereby avoiding the occurrence of mis-operation. Furthermore, the terminal displays the first interface in the single-hand operation mode based on the sliding information of the sliding touch operation. That is, the first interface in the single-hand operation mode has a strong correlation with the user's holding mode. It can be seen that the method for turning on the single-hand operation mode proposed in the present application can not only effectively avoid the occurrence of mis-operation when the single-hand operation mode of the terminal is turned on, but also make uses of the display interface in the single-hand operation mode correspond to the holding mode, thereby reducing the complexity of single-hand operation and improving the intelligence of the terminal.

## Claims

1. A method for turning on a single-hand operation mode, the method comprising:
detecting a sliding touch operation in a first region and determining a sliding information of the sliding touch operation when a first interface is displayed in a full-screen region, wherein the first region is located on a left side or a right side of the full-screen region;
calling out a single-hand mode hot zone in a second region in response to the sliding touch operation, wherein the second region is another region in the full-screen region that is different from the first region;
turning on a single-hand operation mode when an end of the sliding touch operation is detected through the single-hand mode hot zone; and
displaying the first interface in a third region according to the sliding information based on the single-hand operation mode to realize a single-hand operation, wherein the third region is a partial region in the full-screen region.

2. The method according to claim 1, wherein the sliding information comprises a sliding direction and a sliding distance.

3. The method according to claim 2, wherein prior to calling out the single-hand mode hot zone in the second region in response to the sliding touch operation, the method further comprises:
determining whether a sliding distance is not less than a distance threshold;
if the sliding distance is greater than or equal to the distance threshold, it is determined that the sliding touch operation satisfies the condition for calling out the single-hand mode hot zone.

4. The method according to claim 2, wherein prior to calling out the single-hand mode hot zone in the second region in response to the sliding touch operation, the method further comprises:
determining the second region in the full-screen region according to the sliding direction.

5. The method according to claim 1, wherein the step of turning on a single-hand operation mode when an end of the sliding touch operation is detected through the single-hand mode hot zone comprises:
determining a sliding track of the sliding touch operation;
determining whether an end point of the sliding track is in the single-hand mode hot zone;
if the end point of the sliding track is in the single-hand mode hot zone, the single-hand operation mode is turned on.

6. The method according to claim 1, wherein prior to the step of displaying the first interface in the third region according to the sliding information based on the single-hand operation mode to realize the single-hand operation, the method further comprises:
turning on the single-hand operation mode when a click operation or a pressing operation is detected through the single-hand mode hot zone.

7. The method according to claim 2, wherein displaying the first interface in the third region according to the sliding information based on the single-hand operation mod comprises:
determining the third region according to the sliding direction; and
calling out the first interface in the third region.

8. The method according to claim 7, wherein the determining the third region according to the sliding direction comprises:
defining the third region at a lower left of the full-screen region if the sliding direction is from left to right; or
defining the third region at a lower right of the full-screen region if the sliding direction is from right to left.

9. The method according to claim 5 or 6, wherein after turning on the single-hand operation mode, the method further comprises:
turning off the first interface in the full-screen region and calling out a second interface in the full-screen region at the same time, wherein the first interface is suspended above the second interface.

10. The method according to claim 5 or 6, wherein after turning on the single-hand operation mode, the method further comprises:
turning off the single-hand mode hot zone in the second region.

11. The method according to claim 5 or 6, wherein after turning on the single-hand operation mode, the method further comprises:
performing a predetermined feedback processing.

12. The method according to claim 1, wherein the method further comprises:
defining left and right sides of the full-screen region as two sides of a narrow side of the terminal when the terminal is in a horizontal screen state; or
defining the left and right sides of the full-screen region as two sides of a wide side of the terminal when the terminal is in a vertical screen state.

13. The method according to claim 2, wherein the method further comprises:
the sliding direction comprises a left and right sliding along a horizontal direction, or a left and right sliding within a predetermined angle range based on the horizontal direction.

14. The method according to claim 2, wherein prior to calling out the single-hand mode hot zone in the second region in response to the sliding touch operation, the method further comprises:
disposing the second region in the full-screen region in advance.

15. The method according to claim 1, wherein the method further comprises:
reducing a size of the full-screen region according to a predetermined ratio to define the size of the third region.

16. The method according to claim 5, wherein determining whether the end point of the sliding track is in the single-hand mode hot zone comprises:
determining a coordinate data of the end point of the track; and
defining whether the end point of the track is in the single-hand mode hot zone.

17. The method according to claim 5 or 16, wherein determining whether the end point of the sliding track is in the single-hand mode hot zone comprises:
determining that the sliding touch operation ends and turning on the single-hand operation mode if the end point track of the sliding track is in the single-hand mode hot zone and a hovering operation is detected through the single-hand mode hot zone,

18. A terminal, comprising a detecting portion, a determining portion, a call-out portion, a turn-on portion, and a display portion, wherein:
the detecting portion is configured to detect a sliding touch operation in a first region when a first interface is displayed in a full-screen region, wherein the first region is located on a left or right side of the full-screen region;
the determining portion is configured to determine a sliding information of the sliding touch operation;
the call-out portion is configured to call out a single-hand mode hot zone in a second region in response to a sliding touch operation, wherein the second region is another region in the full-screen region that is different from the first region;
the turn-on portion is configured to activate the single-hand operation mode when an end of the sliding touch operation is detected through the single-hand mode hot zone; and
the display portion is configured to display the first interface in a third region based on the single-hand operation mode according to the sliding information to realize single-hand operation, wherein the third region is a partial region in the full-screen region.

19. A terminal comprising a processor and a memory storing instructions that are executable for the processor, wherein the method according to any one of claims 1-17 is implemented when the instructions are executed by the processor.

20. A computer-readable storage medium with a program stored thereon and applied to a terminal, and the method according to any one of claims 1-17 is implemented when the program is executed by a processor.
